# EUROPÄISCHE PATENTSCHRIFT

(11) **EP 3 138 794 B1**
(45) Veröffentlichungstag und Bekanntmachung des Hinweises auf die Patenterteilung: **18.04.2018**
(21) Anmeldenummer: 16183688.7
(22) Anmeldetag: 11.08.2016
(51) Int. Cl.: B65G 47/76

(54) **FÖRDEREINRICHTUNG MIT 3-WEGE-WEICHE**
CONVEYING DEVICE WITH 3-WAY POINTS
DISPOSITIF DE TRANSPORT A AIGUILLAGE 3 VOIES

(30) Priorität: 02.09.2015 DE 102015216735
(43) Veröffentlichungstag der Anmeldung: 08.03.2017
(73) Patentinhaber: ROBERT BOSCH GMBH, 70442 Stuttgart (DE)
(72) Erfinder: Kuepferle, Harald, 71636 Ludwigsburg (DE); Buttau, Hans-Peter, 74348 Lauffen (DE); Duerr, Damiano, 70372 Stuttgart (DE)
(74) Vertreter: Maiß, Harald

(56) Entgegenhaltungen:
- EP-B1- 2 189 399
- DE-A1- 19 843 623
- US-A- 1 407 391

## Beschreibung

Die Erfindung betrifft eine Fördereinrichtung gemäß dem Oberbegriff von Anspruch 1.

Aus der EP 2 189 399 B1 ist eine Fördervorrichtung nach dem Oberbegriff des Anspruchs 1 bekannt. Die Fördervorrichtung hat eine erste und eine zweite Förderstrecke, welche senkrecht zueinander verlaufen. Bei einer Ausführungsform ist eine Weichenzunge vorgesehen, mit der Fördergut von der ersten auf die zweite Förderstrecke überführt werden kann und umgekehrt. Dabei ist es nicht möglich, das Fördergut entlang der ersten Förderstrecke an der zweiten Förderstrecke vorbei zu bewegen. Die Weichenzunge hat zwei Endstellungen, zwischen denen sie mittels eines Drehantriebs bezüglich einer ersten Drehachse gedreht werden kann.

Der Vorteil der vorliegenden Erfindung liegt darin, dass drei unterschiedliche Wege für das Fördergut im Kreuzungsbereich zwischen der ersten und der zweiten Förderstrecke möglich sind. Weiter kann die Weichenzunge problemlos so gestaltet werden, dass sie in keiner Bewegungsstellung seitlich über die Fördervorrichtung übersteht.

Gemäß dem selbständigen Anspruch 1 wird vorgeschlagen, dass ein zweites Drehlager vorgesehen ist, welches derart in Eingriff mit der Weichenzunge bringbar ist, dass die Weichenzunge bezüglich einer von der ersten verschiedenen zweiten Drehachse drehbar ist, wobei der Eingriff zwischen dem ersten Drehlager und der Weichenzunge ein- und ausschaltbar ist, wobei der Eingriff zwischen dem zweiten Drehlager und der Weichenzunge ein- und ausschaltbar ist. Damit kann die Weichenzunge wahlweise um die erste oder die zweite Drehachse gedreht werden, so dass sie insgesamt drei Endstellungen einnehmen kann. Hierdurch werden drei mögliche Wege für das Fördergut bereitgestellt.

Die Weichenzunge ist vorzugsweise starr ausgebildet. Bei den ersten bzw. zweiten Fördermitteln kann es sich beispielsweise um Förderrollen, Förderbänder oder Förderketten handeln. Die ersten und/oder die zweiten Fördermittel können angetrieben sein, beispielsweise mittels eines Elektromotors. Das Fördergut umfasst vorzugsweise einen plattenartigen Werkstückträger, auf dem weiteres Fördergut aufliegt. Das erste und das zweite Drehlager sind vorzugsweise unabhängig voneinander ein- und ausschaltbar. Vorzugsweise sind ein oder mehrere Zungenantriebe vorgesehen, mit denen die Weichenzunge in Drehbewegung versetzt werden kann.

In den abhängigen Ansprüchen sind vorteilhafte Weiterbildungen und Verbesserungen der Erfindung angegeben.

Es kann vorgesehen sein, dass die ersten und die zweiten Fördermittel eine gemeinsame Förderebene oder zwei parallel beabstandete Förderebenen definieren, wobei die erste und die zweite Drehachse senkrecht zur Förderebene und mit Abstand zueinander angeordnet sind. Damit kann die Weichenzunge auf einfache Weise parallel zur Förderebene bewegt werden. Das Gewicht der Weichenzunge kann auf einfache Weise auf der ersten und/oder der zweiten Förderstrecke abgestützt werden.

Es kann vorgesehen sein, dass die Weichenzunge eine erste, eine zweite und eine dritte Endstellung aufweist, wobei in der ersten Endstellung das erste und das zweite Drehlager in Eingriff mit der Weichenzunge bringbar sind, wobei in der zweiten Endstellung ausschließlich das erste Drehlager in Eingriff mit der Weichenzunge bringbar ist, wobei das der ersten Drehachse gegenüberliegende Ende der Weichenzunge an einer ersten Seitenführung der ersten Förderstrecke anliegt, wobei in der dritten Endstellung ausschließlich das zweite Drehlager in Eingriff mit der Weichenzunge bringbar ist, wobei das der zweiten Drehachse gegenüberliegende Ende der Weichenzunge an der ersten Seitenführung anliegt. Durch die genannten drei Endstellungen der Weichenzunge werden drei verschiedene Wege bereitgestellt, entlang derer das Fördergut verfahren werden kann.

Die Weichenzunge kann eine drehbare erste Anschlagrolle aufweisen, mit welcher die Weichenzunge in der zweiten Endstellung an der ersten Seitenführung anliegt. Die Weichenzunge kann eine drehbare zweite Anschlagrolle aufweisen, mit welcher sie in der dritten Endstellung an der ersten Seitenführung anliegt. Hierdurch wird ein Verkeilen bzw. ein Verklemmen der Weichenzunge mit der ersten Seitenführung vermieden. Die Drehachsen der ersten und/oder der zweiten Anschlagrolle sind vorzugsweise senkrecht zur Förderebene ausgerichtet.

Es kann vorgesehen sein, dass die erste Förderstrecke eine erste und eine zweite Seitenführung aufweist, welche parallel zur ersten Förderrichtung und mit Abstand zueinander angeordnet sind, wobei die zweite Förderstrecke eine dritte und eine vierte Seitenführung aufweist, welche parallel zur zweiten Förderrichtung und mit Abstand zueinander angeordnet sind, wobei die zweite Seitenführung zumindest im Bereich zwischen der dritten und der vierten Seitenführung eine Unterbrechung aufweist, welche mit einer fünften Seitenführung an der Weichenzunge zumindest teilweise überbrückbar ist. In der zweiten und der dritten Endstellung kann das Fördergut durch die genannte Unterbrechung hindurch von der ersten zur zweiten Förderstrecke bewegt werden oder umgekehrt. In der ersten Endstellung wird das Fördergut im Bereich der Unterbrechung durch die fünfte Seitenführung seitlich geführt. In der ersten Endstellung der Weichenzunge ist die fünfte Seitenführung vorzugsweise in einer Flucht mit der zweiten Seitenführung angeordnet. Die ersten bis fünften Seitenführungen sind vorzugsweise gerade ausgebildet. Die ersten bis fünften Seitenführungen sind vorzugsweise in Seitenführungseingriff mit dem Fördergut bringbar.

Es kann vorgesehen sein, dass das erste Drehlager im Kreuzungsbereich zwischen der zweiten und der dritten Seitenführung angeordnet ist, wobei das zweite Drehlager im Kreuzungsbereich zwischen der zweiten und der vierten Seitenführung angeordnet ist. Hierdurch kann die Weichenzunge besonders Platz sparend ausgebildet werden. Gleichzeitig wird vermieden, dass das erste und das zweite Drehlager in die Bewegungsbahn des Förderguts hineinragen.

Es kann vorgesehen sein, dass das erste und/oder das zweite Drehlager jeweils einen Lagerzapfen aufweist, der sich in Richtung der betreffenden ersten bzw. zweiten Drehachse erstreckt und welcher in Eingriff mit einer jeweils zugeordneten ersten bzw. zweiten Lagerbohrung an der Weichenzunge bringbar ist, wobei der genannte Eingriff durch eine Linearbewegung des betreffenden Lagerzapfens in Richtung der ersten bzw. zweiten Drehachse ein- und ausschalbar ist. Hierdurch kann der Eingriff zwischen dem ersten bzw. dem zweiten Drehlager und der Weichenzunge auf besonders einfache Weise ein- und ausgeschaltet werden. Der Lagerzapfen und die Lagerbohrung sind vorzugsweise kreiszylindrisch bezüglich der jeweiligen ersten bzw. zweiten Drehachse ausgebildet. Vorzugsweise ist die erste bzw. die zweite Lagerbohrung im Wesentlichen spielfrei derart an den zugeordneten Lagerzapfen angepasst, dass sich die Weichenzunge widerstandsarm um den genannten Lagerzapfen drehen lässt.

Es kann vorgesehen sein, dass zumindest ein Lagerzapfen mit einem zugeordneten Linearantrieb bewegungsgekoppelt ist. Hierdurch kann der Eingriff zwischen dem ersten bzw. dem zweiten Drehlager und der Weichenzunge automatisiert ein- und ausgeschaltet werden. Der Linearantrieb kann als Fluidzylinder ausgebildet sein. Vorzugsweise ist eine Kolbenstange des Fluidzylinders mit dem zugeordneten Lagerzapfen bewegungsgekoppelt, höchst vorzugsweise über ein Gelenk, um ein Verklemmen zu verhindern. Ein Gehäuse des Fluidzylinders ist vorzugsweise an einem Gestell der Fördervorrichtung befestigt. Der Fluidzylinder wird vorzugsweise mittels Druckluft angetrieben. Der Linearantrieb kann auch elektromagnetisch bzw. elektromotorisch ausgebildet sein.

Es kann vorgesehen sein, dass zumindest ein Lagerzapfen ein zugeordnetes Umlenkteil durchsetzt, welches an der jeweiligen Kurveninnenseite in Seitenführungseingriff mit dem Fördergut bringbar ist. Hierdurch ergibt sich eine besonders Platz sparende Anordnung des ersten und des zweiten Drehlagers. Die Umlenkteile und/oder die Weichenzunge sind vorzugsweise plattenartig ausgebildet, wobei die Weichenzunge höchst vorzugsweise oberhalb der Umlenkteile und parallel zu diesen angeordnet ist.

Es kann ein einziger Zungenantrieb vorgesehen sein, welcher derart in Drehantriebsverbindung mit der Weichenzunge steht, dass diese durch den Zungenantrieb wahlweise um die erste oder die zweite Drehachse drehbar ist. Hierdurch können mit einem einzigen Zungenantrieb beide Drehbewegungen der Weichenzunge herbeigeführt werden, was besonders kostengünstig ist. Es ist auch denkbar, dass sowohl der ersten als auch der zweiten Drehachse jeweils ein gesonderter Zungenantrieb zugeordnet ist. Der Zungenantrieb kann beliebig, insbesondere aber pneumatisch oder elektromotorisch arbeiten.

Es kann vorgesehen sein, dass der Zungenantrieb einen linearbeweglichen Schlitten aufweist, der zwischen der ersten und der zweiten Seitenführung angeordnet ist. Hierdurch kann der Schlitten auf einfache Weise in Eingriff mit der Weichenzunge gebracht werden. Vorzugsweise befindet sich der Schlitten in jeder seiner möglichen Stellungen zwischen der ersten und der zweiten Seitenführung.

Es kann vorgesehen sein, dass die ersten Fördermittel von mehreren drehbaren ersten Förderrollen gebildet werden, wobei die betreffende Drehachse senkrecht zur ersten Förderrichtung verläuft, wobei der Schlitten senkrecht zur ersten Förderrichtung linearbeweglich ist, wobei er zwischen zwei benachbarten ersten Förderrollen angeordnet ist. Hierdurch wird die Bewegung des Schlittens nicht durch die ersten Förderrollen gestört.

Es kann vorgesehen sein, dass der Schlitten einen Mitnehmer aufweist, welcher in eine Mitnahmenut an der Unterseite der Weichenzunge eingreift, wobei der Mitnehmer entlang der Mitnahmenut beweglich ist. Hierdurch wird die oben angesprochene Drehantriebsverbindung zwischen dem Zungenantrieb und der Weichenzunge hergestellt. Der Mitnehmer umfasst vorzugsweise eine bezüglich des Schlittens drehbare Mitnahmerolle, deren Drehachse vorzugsweise senkrecht zur Förderebene verläuft. Im Übrigen ist die Mitnahmerolle vorzugsweise fest mit dem Schlitten verbunden. Die Mitnahmerolle ist vorzugsweise kreiszylindrisch ausgebildet.

Es kann vorgesehen sein, dass die Mitnahmenut auf der Weichenzunge entlang einer gebogenen Bahn verläuft, welche vorzugsweise kreisförmig ausgebildet ist. Vorzugsweise hat die Mitnahmenut entlang ihrer Bahn eine konstante Breite.

Es kann vorgesehen sein, dass die Weichenzunge spiegelsymmetrisch ausgebildet ist. Hierdurch werden in der zweiten und dritten Endstellung gleiche Führungseigenschaften der Weichenzunge in Bezug auf das Fördergut erreicht, gleich in welche Richtung das Fördergut läuft.

Es kann vorgesehen sein, dass die Weichenzunge eine sechste Seitenführung für das Fördergut aufweist, welche konkav gebogen ausgebildet ist. Mit der sechsten Seitenführung wird das Fördergut in der zweiten und dritten Endstellung der Weichenzunge seitlich geführt, wenn es sich im Kreuzungsbereich zwischen der ersten und der zweiten Förderstrecke bewegt. Die sechste Seitenführung ist vorzugsweise auf der von der fünften Seitenführung abgewandten Seite der Weichenzunge angeordnet. An der Unterseite der Weichenzunge kann eine Auflagefläche vorgesehen sein, über welche die Weichenzunge auf den ersten Fördermitteln abstützbar ist.

Schutz wird außerdem für eine Kollektion aus einer ersten und einer zweiten Fördervorrichtung nach Anspruch 16 beansprucht, wobei die erste Fördervorrichtung nach einem der Ansprüche 1 bis 15 ausgebildet ist, wobei die zweite Fördervorrichtung mit Ausnahme des ersten und des zweiten Drehlagers identisch zur ersten Fördervorrichtung ausgebildet ist, wobei die zweite Fördervorrichtung kein zweites Drehlager aufweist, wobei das erste Drehlager der zweiten Fördervorrichtung vorzugsweise dauernd im Eingriff mit der Weichenzunge ist. Hierdurch kann mit der zweiten Fördervorrichtung eine 2-Wege-Weiche bereitgestellt werden, wobei die erste und die zweite Fördervorrichtung sehr viele gleiche Teile aufweisen, so dass diese kostengünstig in großen Stückzahlen hergestellt werden können. Die zweite Fördervorrichtung ist dennoch kostengünstiger als die erste Fördervorrichtung. Das erste Drehlager wird vorzugsweise von einem unbeweglichen Lagerzapfen gebildet.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Ansicht einer erfindungsgemäßen Fördervorrichtung;
- Fig. 2: eine perspektivische Ansicht der Weichenzunge und des ersten Drehantriebs;
- Fig. 3: eine perspektivische Ansicht der Weichenzunge von unten;
- Fig. 4: eine perspektivische Ansicht des ersten bzw. des zweiten Drehlagers;
- Fig. 5: eine perspektivische Ansicht des Zungenantriebs;
- Fig. 6: eine Draufsicht der Fördervorrichtung nach Fig. 1 in der ersten Endstellung;
- Fig. 7: eine Draufsicht der Fördervorrichtung nach Fig. 1 in der zweiten Endstellung; und
- Fig. 8: eine Draufsicht der Fördervorrichtung nach Fig. 1 in der dritten Endstellung;

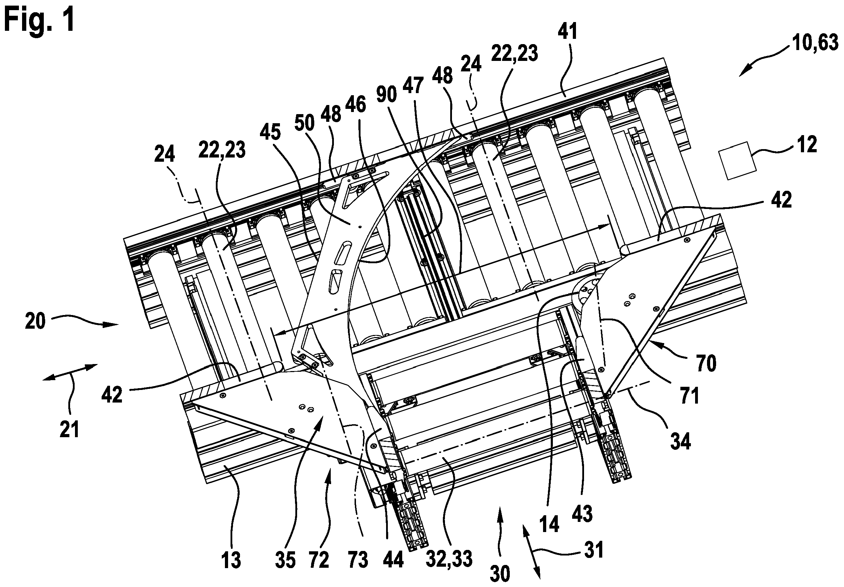

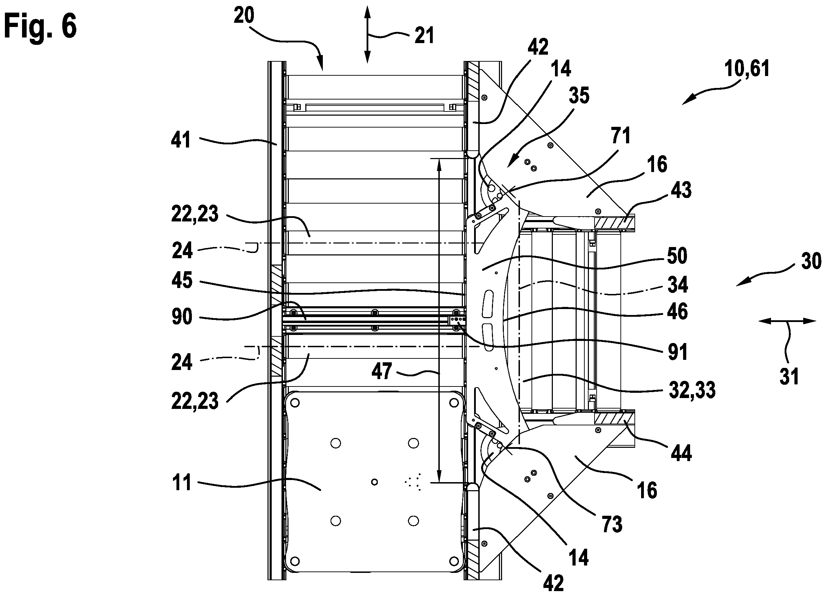

Fig. 1 zeigt eine perspektivische Ansicht einer erfindungsgemäßen Fördervorrichtung 10. Die Fördervorrichtung 10 hat eine erste und eine zweite Förderstrecke 20; 30, die beispielsweise gemäß der EP 2 163 495 B1 ausgebildet sind. Die erste Förderstrecke 20 hat erste Fördermittel 22, mit welchen das Fördergut (Nr. 11 in Fig. 6) entlang einer ersten Förderrichtung 21 bewegt werden kann. Das Fördergut umfasst vorzugsweise einen Werkstückträger, der beispielsweise gemäß der EP 2 189 399 B1 ausgebildet ist. Die ersten Fördermittel 22 werden vorzugsweise von einer Vielzahl von drehbaren ersten Förderrollen 23 gebildet, die entlang der ersten Förderrichtung 21 in einer Reihe angeordnet sind, wobei sie eine Förderebene 12 definieren. Die Drehachsen 24 der ersten Förderrollen 23 sind vorzugsweise senkrecht zur ersten Förderrichtung 21 ausgerichtet. Die erste Förderstrecke 20 hat eine erste und eine zweite Seitenführung 41; 42, die gerade ausgebildet sind, wobei sie mit Abstand zueinander parallel zur ersten Förderrichtung 21 verlaufen. Mit der ersten und der zweiten Seitenführung 41; 42 wird das Fördergut bei seiner Bewegung entlang der ersten Förderrichtung 21 seitlich geführt.

Die zweite Förderstrecke 30 hat zweite Fördermittel 32, mit welchen das Fördergut (Nr. 11 in Fig. 6) entlang einer zweiten Förderrichtung 31 bewegt werden kann. Die zweiten Fördermittel 32 werden vorzugsweise von einer Vielzahl von drehbaren zweiten Förderrollen 33 gebildet, die entlang der zweiten Förderrichtung 31 in einer Reihe angeordnet sind, wobei sie die gleiche Förderebene 12 definieren wie die ersten Förderrollen 23 oder eine Förderebene, die parallel beabstandet gegenüber der Förderebene der ersten Förderrollen 23 angeordnet ist. Die Drehachsen 34 der zweiten Förderrollen 33 sind vorzugsweise senkrecht zur zweiten Förderrichtung 31 ausgerichtet. Die ersten und die zweiten Förderrollen 23; 33 werden vorzugsweise von einem (nicht dargestellten) Elektromotor in Drehbewegung versetzt, um das Fördergut zu bewegen. Ein Elektromotor versetzt vorzugsweise mehrere Förderrollen 23; 33 in Drehbewegung, beispielsweise über eine Königswelle oder einen Ketten- oder einen Riementrieb. Die ersten und die zweiten Fördermittel 22; 32 können auch als Förderbänder oder Förderketten ausgebildet sein. Die zweite Förderstrecke 30 hat eine dritte und eine vierte Seitenführung 43; 44, die gerade ausgebildet sind, wobei sie mit Abstand zueinander parallel zur zweiten Förderrichtung 31 verlaufen. Mit der dritten und der vierten Seitenführung 43; 44 wird das Fördergut bei seiner Bewegung entlang der zweiten Förderrichtung 31 seitlich geführt. Die erste und die zweite Förderstrecke 20; 30 umfassen ein Gestell 13, welches vorzugsweise aus mehreren stranggepressten Aluminiumprofilen gebildet ist. Das Gestell 13 trägt insbesondere die Drehlager für die ersten und die zweiten Förderrollen 23; 33.

Die zweite Förderstrecke 30 verläuft quer, insbesondere senkrecht, zur ersten Förderstrecke 20, wobei ein Ende 35 der zweiten Förderstrecke 30 seitlich an die erste Förderstrecke 20 angrenzt. Die zweite Seitenführung 42 weist zumindest im Bereich zwischen der dritten und der vierten Seitenführung 43; 44 eine Unterbrechung 47 auf, so dass das Fördergut von der zweiten auf die erste Förderstrecke 30; 20 überführt werden kann und umgekehrt.

Weiter ist eine bewegliche Weichenzunge 50 vorgesehen, mit welcher das Fördergut zwischen der ersten und der zweiten Förderstrecke 20; 30 umleitbar ist.

Im Kreuzungsbereich zwischen der dritten und der zweiten Seitenführung 43; 42 ist ein erstes Drehlager 70 für die Weichenzunge 50 angeordnet, welches eine erste Drehachse 71 definiert, die senkrecht zur Förderebene 12 angeordnet ist. Im Kreuzungsbereich zwischen der vierten und der zweiten Seitenführung 44; 42 ist ein zweites Drehlager 72 für die Weichenzunge 50 angeordnet, welches eine zweite Drehachse 73 definiert, die senkrecht zur Förderebene 12 angeordnet ist. Im Bereich des ersten und des zweiten Drehlagers 70; 72 ist jeweils ein gesondertes Umlenkteil 14 angeordnet, welches das Fördergut an der Kurveninnenseite seitlich führt.

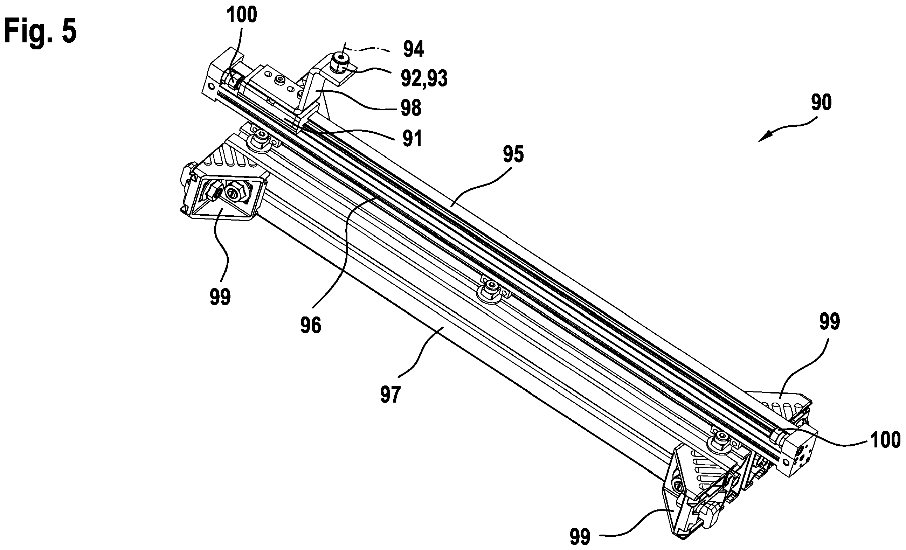

Weiter ist auf den Zungenantrieb 90 hinzuweisen, der zwischen zwei benachbarten ersten Förderrollen 23 angeordnet ist und der mit Bezug auf Fig. 5 näher erläutert wird. Mit dem Zungenantrieb 90 kann die Weichenzunge 50 zwischen den verschiedenen Endstellungen (Nr. 61; 62; 63 in Fig. 6 - 8) hin- und herbewegt werden.

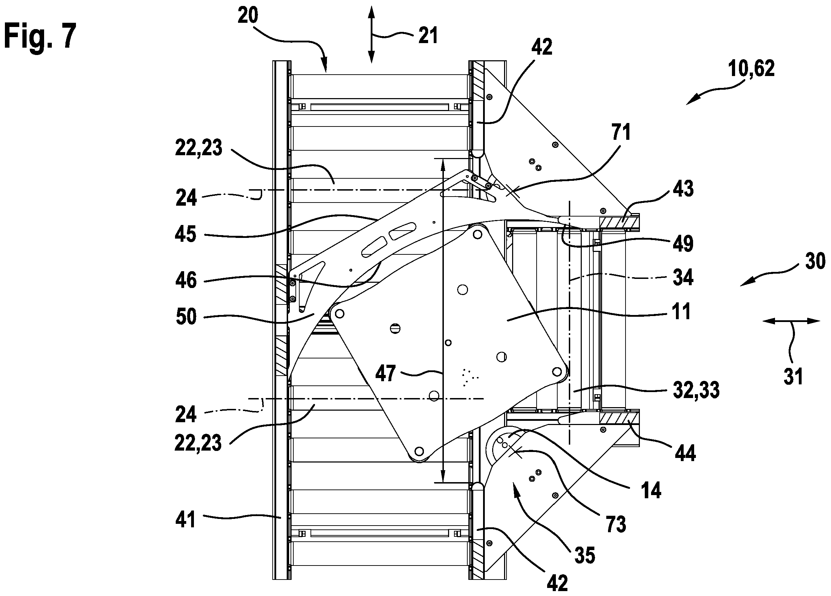

Fig. 1 zeigt die dritte Endstellung 63 der Weichenzunge 50, welche mit Bezug auf Fig. 7 näher erläutert wird.

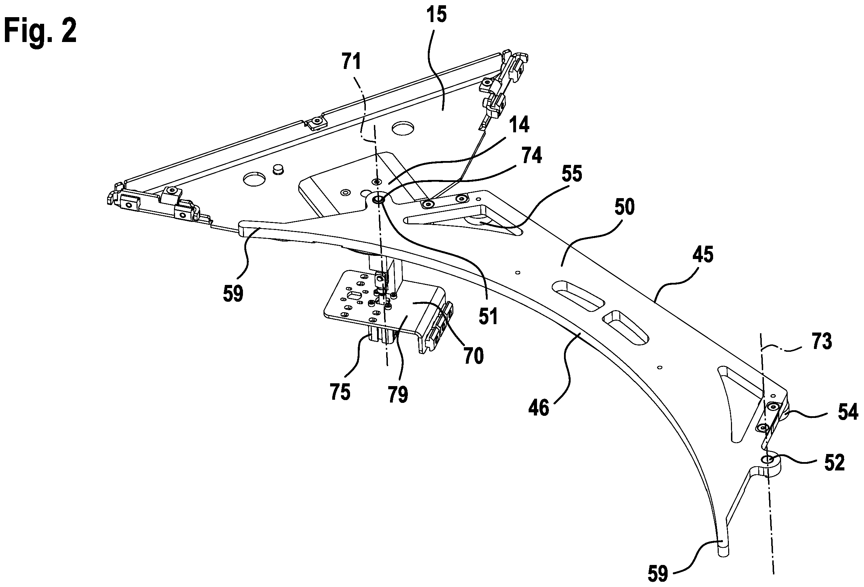

Fig. 2 zeigt eine perspektivische Ansicht der Weichenzunge 50 und des ersten Drehantriebs 70. Der zweite Drehantrieb 72 ist identisch zum ersten Drehantrieb 70 ausgebildet, wobei der zweite Drehantrieb 72 die zweite Drehachse 73 definiert. Der erste 70 und der zweite Drehantrieb 72 sind mit einer Grundplatte 79 am Gestell (Nr. 13 in Fig. 1) befestigt. Sie haben jeweils einen Lagerzapfen 74, der bezüglich der ersten bzw. zweiten Drehachse 71; 73 kreiszylindrisch ausgebildet ist. Der Lagerzapfen 74 kann mittels eines zugeordneten Linearantriebs 75 entlang der ersten bzw. der zweiten Drehachse 71; 73 verschoben worden, so dass er in Eingriff bzw. außer Eingriff mit einer zugeordneten ersten bzw. zweiten Lagerbohrung 51; 52 an der Weichenzunge 50 gebracht werden kann.

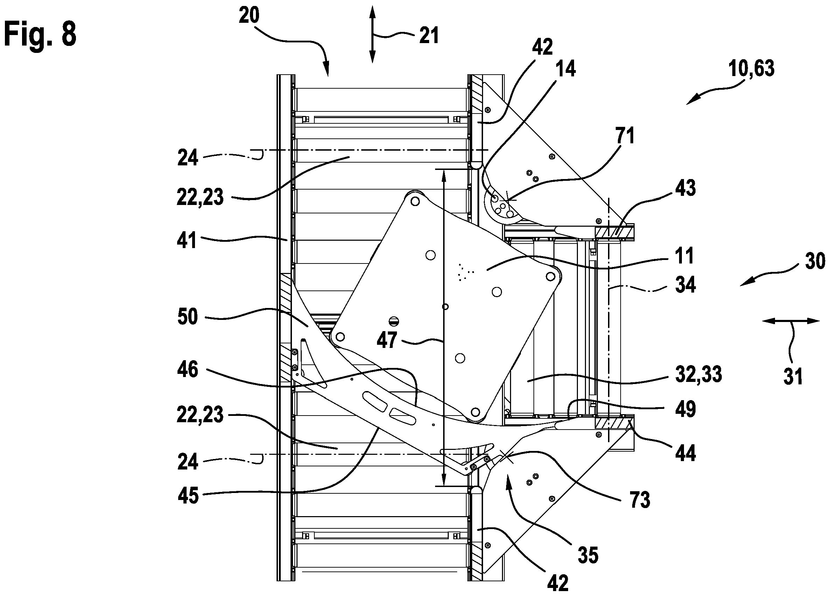

In der ersten Endstellung (siehe Fig. 6) können sowohl das erste 70 als auch das zweite Drehlager 72 in Eingriff mit der zugeordneten ersten bzw. zweiten Lagerbohrung 51; 52 an der Weichenzunge 50 gebracht werden. Wenn das erste Drehlager 70 in Eingriff mit der Weichenzunge 50 ist, wobei das zweite Drehlager 72 außer Eingriff mit der Weichenzunge 50 ist, kann die Weichenzunge 50 mittels des Zungenantriebs (Nr. 90 in Fig. 1) zwischen der ersten und der zweiten Endstellung (siehe Fig. 6 und 7) hin- und her bewegt werden. Wenn das erste Drehlager 70 außer Eingriff mit der Weichenzunge 50 ist, wobei das zweite Drehlager 72 in Eingriff mit der Weichenzunge 50 ist, kann die Weichenzunge 50 mittels des Zungenantriebs (Nr. 90 in Fig. 1) zwischen der ersten und der dritten Endstellung (siehe Fig. 6 und 8) hin- und herbewegt werden.

Die Weichenzunge 50 ist im Wesentlichen in Form einer ebenen Platte mit konstanter Dicke ausgebildet, welche parallel zur Förderebene angeordnet ist. An zwei gegenüberliegenden Enden der Weichenzunge 50 sind die erste und die zweite Lagerbohrung 51; 52 angeordnet, welche jeweils kreiszylindrisch ausgebildet sind, wobei sie die Weichenzunge 50 senkrecht zur Förderebene durchsetzen. Zwischen der ersten und der zweiten Lagerbohrung 51; 52 ist eine fünfte und eine sechste Seitenführung 45; 46 an der Weichenzunge 50 angeordnet. Die fünfte Seitenführung 45 ist gerade ausgebildet, wobei sie parallel zur gedachten Verbindungslinie zwischen der ersten und der zweiten Lagerbohrung 51; 52 verläuft. Die sechste Seitenführung 46 ist auf der von der fünften Seitenführung 45 abgewandten Seite der Weichenzunge 50 angeordnet, wobei sie konkav gebogen, insbesondere kreisförmig verläuft. An ihren beiden gegenüberliegenden Enden ist die sechste Seitenführung 46 jeweils mit einer Nase 59 versehen, welche über die verbleibende Weichenzunge 50 übersteht. Die Nase 59 taucht jeweils in eine zugeordnete Ausnehmung (Nr. 48 in Fig. 1) in der ersten Seitenführung 41 ein, wenn die Weichenzunge 50 mit der betreffenden Anschlagrolle 54; 55 an der ersten Seitenführung 41 anliegt. Damit kann ein störungsfreier Übergang des Förderguts zwischen der ersten 41 und der sechsten Seitenführung 46 erreicht werden. Die erste und die zweite Lagerbohrung 51; 52 sind ebenfalls an einem über die verbleibende Weichenzunge 50 überstehenden Fortsatz angeordnet, welcher in eine zugeordnete Ausnehmung an der ersten Seitenführung eintaucht, wenn die Weichenzunge 50 dort anliegt. Weiter ist auf die erste und die zweite Anschlagrolle 54, 55 hinzuweisen, welche bezüglich einer zur Förderebene senkrechten Drehachse drehbar an der Weichenzunge 50 gelagert sind. Die Weichenzunge 50 ist so geformt, dass allein die erste und die zweite Anschlagrolle 54; 55 die erste Seitenführung (Nr. 41 in Fig. 1) berühren können. Durch deren Drehbarkeit wird verhindert, dass sich die Weichenzunge 50 mit der ersten Seitenführung verkeilt. Die erste und die zweite Anschlagrolle 54; 55 sind an der den Förderstrecken zugewandten Unterseite der Weichenzunge 50 angeordnet. Die Weichenzunge 50 ist spiegelsymmetrisch bezüglich einer Symmetrieebene ausgebildet, die senkrecht zur Förderebene verläuft. Weiter kann die Weichenzunge 50 Durchbrüche zur Gewichts- und Materialeinsparung aufweisen.

Das Umlenkteil 14 ist unterhalb der Weichenzunge 50 angeordnet, wobei es an einer Tragplatte 15 befestigt ist, welche wiederum an dem Gestell 13 befestigt ist. Es ist im Wesentlichen in Form einer ebenen Platte mit konstanter Dicke ausgebildet, welche parallel zur Förderebene angeordnet ist. Solange sich der betreffende Lagerzapfen 74 nicht in Eingriff mit der Weichenzunge 50 befindet, kann die Weichenzunge 50 über das Umlenkteil 14 hinweg bewegt werden. Der Lagerzapfen 74 ist die einzige Verbindung zwischen dem Umlenkteil 14 und der Weichenzunge 50. Das Umlenkteil 14 besteht vorzugsweise aus Kunststoff, der vorzugsweise so ausgewählt ist, dass sich ein reibungsarmer Kontakt zwischen Umlenkteil 14 und Fördergut ergibt. Die Seitenfläche des Umlenkteils 14, welche das Fördergut an der Kurveninnenseite führt, ist vorzugsweise konvex gekrümmt, insbesondere kreisförmig gekrümmt ausgebildet.

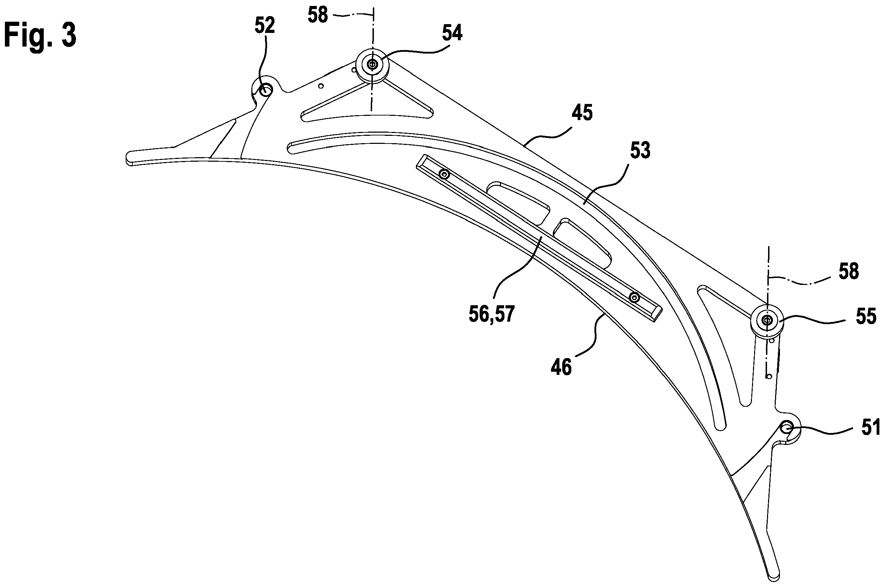

Fig. 3 zeigt eine perspektivische Ansicht der Weichenzunge 50 von unten, also von den Förderstrecken her. Dort ist insbesondere die Auflagefläche 56 zu erkennen, mit der die Weichenzunge 50 auf den Förderrollen (Nr. 23; 33 in Fig. 1) aufliegt, so dass deren Gewicht abgestützt ist. Die Auflageflache 56 ist beispielsweise an einem gesonderten Auflageteil 57 vorgesehen, welches beispielsweise als gerade Leiste ausgebildet ist, die mit der verbleibenden Weichenzunge 50 verschraubt ist.

Weiter ist auf die Mitnahmenut 53 hinzuweisen. Die Mitnahmenut 53 hat über ihre gesamte Länge eine konstante Breite, wobei die entsprechenden Seitenflächen der Mitnahmenut 53 senkrecht zur Förderebene angeordnet sind. Die Mitnahmenut 53 verläuft entlang einer gebogenen Bahn, welche vorzugsweise kreisförmig gebogen ist, wobei deren Krümmungsradius höchst vorzugsweise kleiner als der Krümmungsradius der sechsten Seitenführung 46 ist. In die Mitnahmenut 53 greift der Mitnehmer (Nr. 92 in Fig. 5) des Zungenantriebs ein.

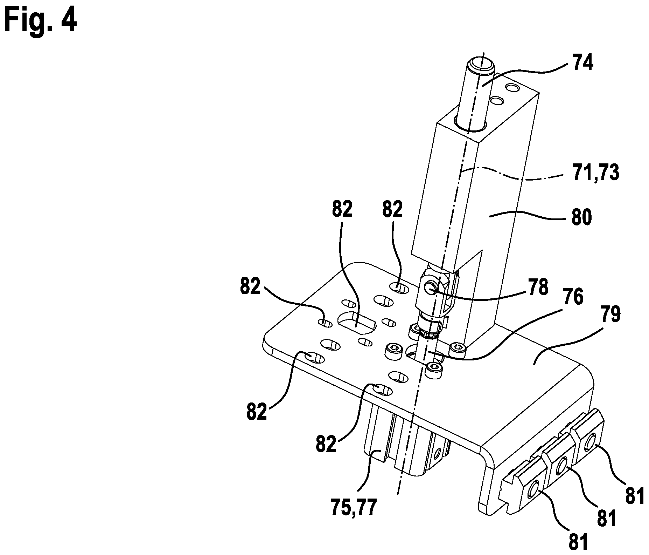

Fig. 4 zeigt eine perspektivische Ansicht des ersten bzw. des zweiten Drehlagers 70; 72. Das erste und das zweite Drehlager 70; 72 sind identisch ausgeführt. Sie haben jeweils eine L-förmig gebogene Grundplatte 79, deren einer Schenkel mit dem Gestell (Nr. 13 in Fig. 1) fest verbunden ist, beispielsweise mittels Nutensteinen 81. An der Oberseite des anderen Schenkels ist ein gesondertes Lagerteil 80 befestigt, in welchem der kreiszylindrische Lagerzapfen 74 entlang der ersten bzw. zweiten Drehachse 71; 73 gleitbeweglich geführt ist. Der Lagerzapfen 74 steht über ein Gelenk 78 in Mitnahmeverbindung mit einem Linearantrieb 75. Der Linearantrieb 75 ist beispielsweise als Pneumatikzylinder ausgebildet, dessen Zylindergehäuse 77 an der Unterseite der Grundplatte 79 befestigt ist. Die entsprechende Kolbenstange 76 durchsetzt die Grundplatte 79, wobei sie über das Gelenk 78 mit dem Lagerzapfen 74 verbunden ist. Das Gelenk 78 hat vorzugsweise so viel Spiel, dass ein Verklemmen des Lagerzapfens 74 im Lagerteil 80 sicher ausgeschlossen ist. Im Lagerteil 80 ist der Lagerzapfen 74 im Wesentlichen spielfrei gelagert.

Anzumerken ist, dass die vorliegende Grundplatte 79 für unterschiedliche Baugrößen der Fördervorrichtung verwendbar ist. Sie ist daher mit mehreren Durchbrüchen 82 versehen, die vorliegend ungenutzt sind, die aber bei anderen Baugrößen zur Befestigung des Linearantriebs 75 und des Lagerteils 80 verwendet werden.

Fig. 5 zeigt eine perspektivische Ansicht des Zungenantriebs 90. Der Zungenantrieb 90 umfasst einen Schlitten 91, welcher senkrecht zur ersten Förderrichtung (Nr. 21 in Fig. 1) und parallel zur Förderebene linearbeweglich ist. Der entsprechende Bewegungsweg umfasst nahezu den gesamten Zwischenraum zwischen der ersten und der zweiten Seitenführung (Nr. 41; 42 in Fig. 1), wobei er vorliegend durch zwei Endanschläge 100 begrenzt ist. Der Schlitten 91 ist dabei unterhalb der Förderebene zwischen zwei benachbarten ersten Förderrollen (Nr. 23 in Fig. 1) angeordnet. Der Schlitten 91 ist mit einem Mitnehmer 92 versehen, der nach oben über die Förderebene hinaus ragt, so dass er in die Mitnahmenut (Nr. 53 in Fig. 3) der Weichenzunge eingreifen kann. Der Mitnehmer 92 umfasst vorliegend einen gesonderten Bügel 98, welcher fest mit dem Schlitten 91 verbunden ist. An dem Bügel 98 ist eine gesonderte Mitnahmerolle 93 drehbar gelagert, welche in die genannte Mitnahmenut eingreift. Die Drehachse 94 der Mitnahmerolle 93 ist senkrecht zur Förderebene ausgerichtet.

Der Zungenantrieb 90 hat eine gerade Führungsschiene 95, auf welcher der Schlitten linearbeweglich gelagert ist. Der entsprechende Führungseingriff kann als Gleit- oder als Wälzlagerung gestaltet sein. Weiter hat der Zungenantrieb 90 einen pneumatischen Schlitzzylinder 96, mit dem der Schlitten 91 in Bewegung versetzt werden kann. Anstelle des Schlitzzylinders 96 kann auch ein elektrischer Linearantrieb oder jeder beliebige andere Linearantrieb verwendet werden. Die Linearbewegung des Schlittens 91 wird über den Mitnehmer 92 auf die Weichenzunge übertragen, so dass diese sich wahlweise um die erste oder die zweite Drehachse dreht.

Der Zungenantrieb 90 ist an einer gesonderten Traverse 97 befestigt, welche vorliegend zwei stranggepresste Aluminiumprofile umfasst. Die Traverse 97 ist mit mehreren gesonderten Verbindern 99 mit dem Gestell (Nr. 13 in Fig. 1) verschraubt.

Fig. 6 zeigt eine Draufsicht der Fördervorrichtung 10 nach Fig. 1 in der ersten Endstellung 61, wobei die Zeichenebene der Fig. 6 parallel zur Förderebene angeordnet ist. Das Fördergut 11 in Form eines Werkstückträgers befindet sich vorliegend auf der ersten Förderstrecke 20, wobei es von der ersten und der zweiten Seitenführung 41; 42 entlang der ersten Förderrichtung 21 geführt wird. Die fünfte Seitenführung 45 ist in der ersten Endstellung 61 der Weichenzunge 50 in einer Flucht mit der zweiten Seitenführung 42 angeordnet. Das Fördergut 11 ist damit auch im Kreuzungsbereich der ersten und der zweiten Förderstrecke 20; 30 seitlich geführt.

In der ersten Endstellung 61 der Weichenzunge 50 kann sowohl das erste als auch das zweite Drehlager in Eingriff mit der Weichenzunge gebracht werden. Der Schlitten 91 des Zungenantriebs 90 befindet sich in der der zweiten Seitenführung 42 zugewandten Endstellung. Die Weichenzunge 50 überdeckt in der ersten Endstellung 61 beide Umlenkteile 14 derart, dass sie nicht in Führungseingriff mit dem Fördergut 11 gelangen können.

In Fig. 6 ist zu erkennen, dass die beiden Umlenkteile 14 jeweils durch eine Abdeckplatte 16 nach oben hin abgedeckt sind. Die Abdeckplatte 16 ist so gestaltet, dass sie die erste bzw. die zweite Drehachse 71; 72 nach oben hin überdeckt. Weiter überdeckt sie das dortige Ende der Weichenzunge 50 nach oben hin. Die Abdeckplatte 16 verhindert somit, dass die Weichenzunge 50 nach oben von den Förderstrecken 20; 30 abgehoben wird, wenn der Lagerzapfen (Nr. 74 in Fig. 4) in die Weichenzunge 50 eingeführt wird.

In der ersten Endstellung 61 der Weichenzunge 50 kann das Fördergut 11 ausschließlich entlang der ersten Förderstrecke 20 bewegt werden. Es ist nicht möglich, das Fördergut 11 von der ersten auf die zweite Förderstrecke 20; 30 zu überführen oder umgekehrt.

Fig. 7 zeigt eine Draufsicht der Fördervorrichtung 10 nach Fig. 1 in der zweiten Endstellung 62, wobei die Zeichenebene der Fig. 7 parallel zur Förderebene angeordnet ist. Die zweite Endstellung 62 wird ausgehend von der ersten Endstellung angefahren, indem das erste Drehlager in Eingriff mit der Weichenzunge 50 gebracht wird, wobei das zweite Drehlager außer Eingriff mit der Weichenzunge 50 gebracht wird und wobei der Schlitten (Nr. 91 in Fig. 6) des Zungenantriebs zur ersten Seitenführung 41 hin bewegt wird. Dabei wird die Mitnahmerolle (Nr. 93 in Fig. 5) von einem Ende der Mitnahmenut (Nr. 53 in Fig. 3) zum gegenüberliegenden Ende der Mitnahmenut verschoben. Die zweite Endstellung 62 ist erreicht, wenn die erste Anschlagrolle (Nr. 54 in Fig. 3) an der ersten Seitenführung 41 anliegt.

In der zweiten Endstellung 62 kann das Fördergut 11 von dem in Fig. 7 unteren Abschnitt der ersten Förderstrecke 20 auf die zweite Förderstrecke 30 überführt werden oder umgekehrt. An der Kurvenaußenseite wird das Fördergut 11 dabei von der sechsten Seitenführung 46 an der Weichenzunge 50 seitlich geführt. An der Kurveninnenseite wird das Fördergut 11 vom Umlenkteil 14 an der zweiten Drehachse 73 seitlich geführt. Der entsprechende Führungseingriff ist Gegenstand der EP 2 189 399 B1.

Hinzuweisen ist noch auf die Einführschräge 49 am Ende der dritten Seitenführung 43. Diese ist so ausgelegt, dass sich in beide Bewegungsrichtungen des Förderguts 11 ein absatzfreier Übergang zwischen der dritten und der sechsten Seitenführung 43; 46 ergibt, wenn sich die Weichenzunge 50 in der zweiten Endstellung 62 befindet.

Fig. 8 zeigt eine Draufsicht der Fördervorrichtung 10 nach Fig. 1 in der dritten Endstellung 63, wobei die Zeichenebene der Fig. 8 parallel zur Förderebene angeordnet ist. Die dritte Endstellung 63 wird ausgehend von der ersten Endstellung angefahren, indem das zweite Drehlager in Eingriff mit der Weichenzunge 50 gebracht wird, wobei das erste Drehlager außer Eingriff mit der Weichenzunge 50 gebracht wird und wobei der Schlitten (Nr. 91 in Fig. 6) des Zungenantriebs zur ersten Seitenführung 41 hin bewegt wird. Dabei wird die Mitnahmerolle (Nr. 93 in Fig. 5) von einem Ende der Mitnahmenut (Nr. 53 in Fig. 3) zum gegenüberliegenden Ende der Mitnahmenut verschoben. Die dritte Endstellung 63 ist erreicht, wenn die zweite Anschlagrolle (Nr. 55 in Fig. 3) an der ersten Seitenführung 41 anliegt.

In der dritten Endstellung 63 kann das Fördergut 11 von dem in Fig. 8 oberen Abschnitt der ersten Förderstrecke 20 auf die zweite Förderstrecke 30 überführt werden oder umgekehrt. An der Kurvenaußenseite wird das Fördergut dabei von der sechsten Seitenführung 46 an der Weichenzunge 50 seitlich geführt. An der Kurveninnenseite wird das Fördergut 11 vom Umlenkteil 14 an der ersten Drehachse 71 seitlich geführt.

Hinzuweisen ist noch auf die Einführschräge 49 am Ende der vierten Seitenführung 44. Diese ist so ausgelegt, dass sich in beide Bewegungsrichtungen des Förderguts 11 ein absatzfreier Übergang zwischen der vierten und der sechsten Seitenführung 44; 46 ergibt, wenn sich die Weichenzunge in der dritten Endstellung 63 befindet.

Außerdem ist noch anzumerken, dass die Fördervorrichtung 10 in der zweiten Endstellung 62 spiegelsymmetrisch zur Fördervorrichtung 10 in der dritten Endstellung 63 ausgebildet ist.

### Bezugszeichen

- 10: Fördervorrichtung
- 11: Fördergut
- 12: Förderebene
- 13: Gestell
- 14: Umlenkteil
- 15: Tragplatte
- 16: Abdeckplatte

- 20: erste Förderstrecke
- 21: erste Förderrichtung
- 22: erstes Fördermittel
- 23: erste Förderrolle
- 24: Drehachse der ersten Förderrolle

- 30: zweite Förderstrecke
- 31: zweite Förderrichtung
- 32: zweites Fördermittel
- 33: zweite Förderrolle
- 34: Drehachse der zweiten Förderrolle
- 35: Ende der zweiten Förderstrecke

- 41: erste Seitenführung
- 42: zweite Seitenführung
- 43: dritte Seitenführung
- 44: vierte Seitenführung
- 45: fünfte Seitenführung
- 46: sechste Seitenführung
- 47: Unterbrechung der zweiten Seitenführung
- 48: Ausnehmung in der ersten Seitenführung
- 49: Einführschräge
- 50: Weichenzunge
- 51: erste Lagerbohrung
- 52: zweite Lagerbohrung
- 53: Mitnahmenut
- 54: erste Anschlagrolle
- 55: zweite Anschlagrolle
- 56: Auflagefläche
- 57: Auflageteil
- 58: Drehachse der Anschlagrolle
- 59: Nase

- 61: erste Endstellung der Weichenzunge
- 62: zweite Endstellung der Weichenzunge
- 63: dritte Endstellung der Weichenzunge

- 70: erstes Drehlager
- 71: erste Drehachse
- 72: zweites Drehlager
- 73: zweite Drehachse
- 74: Lagerzapfen
- 75: Linearantrieb
- 76: Kolbenstange
- 77: Zylindergehäuse
- 78: Gelenk
- 79: Grundplatte
- 80: Lagerteil
- 81: Nutenstein
- 82: Durchbruch

- 90: Zungenantrieb
- 91: Schlitten
- 92: Mitnehmer
- 93: Mitnahmerolle
- 94: Drehachse der Mitnahmerolle
- 95: Führungsschiene
- 96: Schlitzzylinder
- 97: Traverse
- 98: Bügel
- 99: Verbinder
- 100: Endanschlag

## Patentansprüche

1. Fördervorrichtung (10) zum Fördern von Fördergut (11), wobei die Fördervorrichtung (10) eine erste Förderstrecke (20) aufweist, welche bewegliche erste Fördermittel (22) aufweist, auf die das Fördergut (11) auflegbar und entlang einer ersten Förderrichtung (21) förderbar ist, wobei eine zweite Förderstrecke (30) vorgesehen ist, welche bewegliche zweite Fördermittel (22) aufweist, auf die das Fördergut (11) auflegbar und entlang einer zweiten Förderrichtung (31) förderbar ist, wobei ein Ende (35) der zweiten Förderstrecke (30) seitlich an die erste Förderstrecke (20) angrenzt, wobei die erste und die zweite Förderrichtung (21; 31) quer zueinander vorlaufen, wobei eine bewegliche Weichenzunge (50) vorgesehen ist, mit welcher das Fördergut (11) zwischen der ersten und der zweiten Förderstrecke (20; 30) umleitbar ist, wobei ein erstes Drehlager (70) vorgesehen ist, welches derart in Eingriff mit der Weichenzunge (50) bringbar ist, dass die Weichenzunge (50) bezüglich einer ersten Drehachse (71) drehbar ist,
**dadurch gekennzeichnet, dass** ein zweites Drehlager (72) vorgesehen ist, welches derart in Eingriff mit der Weichenzunge (50) bringbar ist, dass die Weichenzunge (50) bezüglich einer von der ersten (71) verschiedenen zweiten Drehachse (73) drehbar ist, wobei der Eingriff zwischen dem ersten Drehlager (70) und der Weichenzunge (50) ein- und ausschaltbar ist, wobei der Eingriff zwischen dem zweiten Drehlager (72) und der Weichenzunge (50) ein- und ausschaltbar ist.

2. Fördervorrichtung nach Anspruch 1,
wobei die ersten und die zweiten Fördermittel (22; 32) eine gemeinsame Förderebene (12) oder zwei parallel beabstandete Förderebenen definieren, wobei die erste und die zweite Drehachse (71; 73) senkrecht zur Förderebene (12) und mit Abstand zueinander angeordnet sind.

3. Fördervorrichtung nach einem der vorstehenden Ansprüche,
wobei die Weichenzunge (50) eine erste, eine zweite und eine dritte Endstellung (61; 62; 63) aufweist, wobei in der ersten Endstellung (61) das erste und das zweite Drehlager (70; 72) in Eingriff mit der Weichenzunge (50) bringbar sind, wobei in der zweiten Endstellung (62) ausschließlich das erste Drehlager (70) in Eingriff mit der Weichenzunge (50) bringbar ist, wobei das der ersten Drehachse (71) gegenüberliegende Ende der Weichenzunge (50) an einer ersten Seitenführung (41) der ersten Förderstrecke (20) anliegt, wobei in der dritten Endstellung (63) ausschließlich das zweite Drehlager (72) in Eingriff mit der Weichenzunge (50) bringbar ist, wobei das der zweiten Drehachse (73) gegenüberliegende Ende der Weichenzunge (50) an der ersten Seitenführung (41) anliegt.

4. Fördervorrichtung nach einem der vorstehenden Ansprüche,
wobei die erste Förderstrecke (20) eine erste und eine zweite Seitenführung (41; 42) aufweist, welche parallel zur ersten Förderrichtung (21) und mit Abstand zueinander angeordnet sind, wobei die zweite Förderstrecke (30) eine dritte und eine vierte Seitenführung (43; 44) aufweist, welche parallel zur zweiten Förderrichtung (31) und mit Abstand zueinander angeordnet sind, wobei die zweite Seitenführung (42) zumindest im Bereich zwischen der dritten und der vierten Seitenführung (43; 44) eine Unterbrechung (47) aufweist, welche mit einer fünften Seitenführung (45) an der Weichenzunge (50) zumindest teilweise überbrückbar ist.

5. Fördervorrichtung nach Anspruch 4,
wobei das erste Drehlager (70) im Kreuzungsbereich zwischen der zweiten und der dritten Seitenführung (42; 43) angeordnet ist, wobei das zweite Drehlager (72) im Kreuzungsbereich zwischen der zweiten und der vierten Seitenführung (42; 44) angeordnet ist.

6. Fördervorrichtung nach einem der vorstehenden Ansprüche,
wobei das erste und/oder das zweite Drehlager (70; 72) jeweils einen Lagerzapfen (74) aufweist, der sich in Richtung der betreffenden ersten bzw. zweiten Drehachse (71; 73) erstreckt und welcher in Eingriff mit einer jeweils zugeordneten ersten bzw. zweiten Lagerbohrung (51; 52) an der Weichenzunge (50) bringbar ist, wobei der genannte Eingriff durch eine Linearbewegung des betreffenden Lagerzapfens (74) in Richtung der ersten bzw. zweiten Drehachse (71; 73) ein- und ausschalbar ist.

7. Fördervorrichtung nach Anspruch 6,
wobei zumindest ein Lagerzapfen (74) mit einem zugeordneten Linearantrieb (75) bewegungsgekoppelt ist.

8. Fördervorrichtung nach Anspruch 6 oder 7,
wobei zumindest ein Lagerzapfen (74) ein zugeordnetes Umlenkteil (14) durchsetzt, welches an der jeweiligen Kurveninnenseite in Seitenführungseingriff mit dem Fördergut (11) bringbar ist.

9. Fördervorrichtung nach einem der vorstehenden Ansprüche,
wobei ein einziger Zungenantrieb (90) vorgesehen ist, welcher derart in Drehantriebsverbindung mit der Weichenzunge (50) steht, dass diese durch den Zungenantrieb (90) wahlweise um die erste oder die zweite Drehachse (71; 73) drehbar ist.

10. Fördervorrichtung nach Anspruch 9,
wobei der Zungenantrieb (90) einen linearbeweglichen Schlitten (91) aufweist, der zwischen der ersten und der zweiten Seitenführung (40; 41) angeordnet ist.

11. Fördervorrichtung nach Anspruch 10,
wobei die ersten Fördermittel (22) von mehreren drehbaren ersten Förderrollen (23) gebildet werden, wobei die betreffende Drehachse (24) senkrecht zu ersten Förderrichtung (21) verläuft, wobei der Schlitten (91) senkrecht zur ersten Förderrichtung (21) linearbeweglich ist, wobei er zwischen zwei benachbarten ersten Förderrollen (23) angeordnet ist.

12. Fördervorrichtung nach Anspruch 10 oder 11,
wobei der Schlitten (91) einen Mitnehmer (92) aufweist, welcher in eine Mitnahmenut (53) an der Unterseite der Weichenzunge (50) eingreift, wobei der Mitnehmer (92) entlang der Mitnahmenut (53) beweglich ist.

13. Fördervorrichtung nach Anspruch 12,
wobei die Mitnahmenut (53) auf der Weichenzunge (50) entlang einer gebogenen Bahn verläuft, welche vorzugsweise kreisförmig ausgebildet ist.

14. Fördervorrichtung nach einem der vorstehenden Ansprüche,
wobei die Weichenzunge (50) spiegelsymmetrisch ausgebildet ist.

15. Fördervorrichtung nach einem der vorstehenden Ansprüche,
wobei die Weichenzunge (50) eine sechste Seitenführung (46) für das Fördergut (11) aufweist, welche konkav gebogen ausgebildet ist.

16. Kollektion aus einer ersten und einer zweiten Fördervorrichtung, wobei die erste Fördervorrichtung nach einem der vorstehenden Ansprüche ausgebildet ist, wobei die zweite Fördervorrichtung mit Ausnahme des ersten und des zweiten Drehlagers identisch zur ersten Fördervorrichtung ausgebildet ist, wobei die zweite Fördervorrichtung kein zweites Drehlager aufweist, wobei das erste Drehlager der zweiten Fördervorrichtung vorzugsweise dauernd im Eingriff mit der Weichenzunge ist.

## Claims

1. Conveying device (10) for conveying conveyed goods (11), wherein the conveying device (10) has a first conveying section (20) which has movable first conveying means (22), the conveyed goods (11) being capable of being placed on said first conveying means (22) and being capable of being conveyed along a first conveying direction (21), wherein a second conveying section (30) which has movable second conveying means (22) is provided, the conveyed goods (11) being capable of being placed on said second conveying means (22) and being capable of being conveyed along a second conveying direction (31), wherein an end (35) of the second conveying section (30) is laterally contiguous to the first conveying section (20), wherein the first and the second conveying direction (21; 31) run so as to be mutually transverse, wherein a movable turnout blade (50) by way of which the conveyed goods (11) are divertible between the first and the second conveying section (20; 30) is provided, wherein a first pivot bearing (70) which is capable of being brought to engage with the turnout blade (50) in such a manner that the turnout blade (50) is rotatable in relation to a first rotation axis (71) is provided,
**characterized in that**
a second pivot bearing (72) which is capable of being brought to engage with the turnout blade (50) in such a manner that the turnout blade (50) is rotatable in relation to a second rotation axis (73) that is different from the first rotation axis (71) is provided, wherein the engagement between the first pivot bearing (70) and the turnout blade (50) is activatable and deactivatable, wherein the engagement between the second pivot bearing (72) and the turnout blade (50) is activatable and deactivatable.

2. Conveying device according to Claim 1,
wherein the first and the second conveying means (22; 32) define one common conveying plane (12) or two conveying planes that are spaced apart in parallel, wherein the first and the second rotation axis (71; 73) are disposed so as to be perpendicular to the conveying plane (12) and so as to be mutually spaced apart.

3. Conveying device according to one of the preceding claims,
wherein the turnout blade (50) has a first, a second, and a third terminal position (61; 62; 63), wherein in the first terminal position (61) the first and the second pivot bearing (70; 72) are capable of being brought to engage with the turnout blade (50), wherein in the second terminal position (62) the first pivot bearing (70) exclusively is capable of being brought to engage with the turnout blade (50), wherein that end of the turnout blade (50) that is opposite the first rotation axis (71) bears on a first lateral guide (41) of the first conveying section (20), wherein in the third terminal position (63) the second pivot bearing (72) exclusively is capable of being brought to engage with the turnout blade (50), wherein that end of the turnout blade (50) that is opposite the second rotation axis (73) bears on the first lateral guide (41).

4. Conveying device according to one of the preceding claims,
wherein the first conveying section (20) has a first and a second lateral guide (41; 42) which are disposed so as to be parallel with the first conveying direction (21) and so as to be mutually spaced apart, wherein the second conveying section (30) has a third and a fourth lateral guide (43; 44) which are disposed so as to be parallel with the second conveying direction (31) and so as to be mutually spaced apart, wherein the second lateral guide (42) at least in the region between the third and the fourth lateral guide (43; 44) has an interruption (47) which is capable of being at least partially bridged by way of a fifth lateral guide (45) on the turnout blade (50).

5. Conveying device according to Claim 4,
wherein the first pivot bearing (70) is disposed in the intersection region between the second and the third lateral guide (42; 43), wherein the second pivot bearing (72) is disposed in the intersection region between the second and the fourth lateral guide (42; 44).

6. Conveying device according to one of the preceding claims,
wherein the first and/or the second pivot bearing (70; 72) have/has in each case one bearing pin (74) which extends in the direction of the respective first or second pivot axis (71; 73), respectively, and which is capable of being brought to engage with a respective assigned first or second bearing bore (51; 52), respectively, on the turnout blade (50), wherein said engagement is activatable and deactivatable by way of a linear movement of the respective bearing pin (74) in the direction of the first or the second pivot axis (71; 73), respectively.

7. Conveying device according to Claim 6,
wherein at least one bearing pin (74) in terms of motion is coupled to an assigned linear drive (75) .

8. Conveying device according to either of Claims 6 and 7,
wherein at least one bearing pin (74) penetrates an assigned deflection part (14) which is capable of being brought to engage with the conveyed goods (11) by way of the lateral guide on the respective inside of the curve.

9. Conveying device according to one of the preceding claims,
wherein a single blade drive (90) is provided which in terms of being rotatably driven is connected to the turnout blade (50) in such a manner that the latter by way of the blades drive (90) is rotatable selectively about the first or about the second pivot axis (71; 73).

10. Conveying device according to Claim 9,
wherein the blade drive (90) has a slide (91) that is movable in a linear manner and is disposed between the first and the second lateral guide (40; 41).

11. Conveying device according to Claim 10,
wherein the first conveying means (22) are formed by a plurality of rotatable first conveying rollers (23), wherein the respective pivot axis (24) runs perpendicularly to the first conveying direction (21), wherein the slide (91) is movable in a linear manner perpendicularly to the first conveying direction (21), wherein said slide (91) is disposed between two adjacent first conveying rollers (23).

12. Conveying device according to either of Claims 10 and 11,
wherein the slide (91) has an entrainment element (92) which engages in an entrainment groove (53) on the lower side of the turnout blade (50), wherein the entrainment element (92) is movable along the entrainment groove (53).

13. Conveying device according to Claim 12,
wherein the entrainment groove (53) on the turnout blade (50) runs along a curved path which is preferably configured so as to be circular.

14. Conveying device according to one of the preceding claims,
wherein the turnout blade (50) is configured in a mirror-symmetrical manner.

15. Conveying device according to one of the preceding claims,
wherein the turnout blade (50) has a sixth lateral guide (46) for the conveyed goods (11), said sixth lateral guide (46) being configured so as to be curved in a concave manner.

16. Collection of a first and of a second conveying device, wherein the first conveying device is configured according to one of the preceding claims, wherein the second conveying device, with the exception of the first and of the second pivot bearing, is configured so as to be identical to the first conveying device, wherein the second conveying device does not have a second pivot bearing, wherein the first pivot bearing of the second conveying device is preferably permanently engaged in the turnout blade.

## Revendications

1. Dispositif de transport (10) pour transporter des marchandises (11), le dispositif de transport (10) présentant une première section de transport (20) qui présente des premiers moyens de transport mobiles (22) sur lesquels les marchandises (11) peuvent être posées et transportées le long d'une première direction de transport (21), une deuxième section de transport (30) étant prévue, laquelle présente des deuxièmes moyens de transport mobiles (22) sur lesquels les marchandises (11) peuvent être posées et transportées le long d'une deuxième direction de transport (31), une extrémité (35) de la deuxième section de transport (30) étant adjacente latéralement à la première section de transport (20), la première et la deuxième direction de transport (21 ; 31) s'étendant transversalement l'une par rapport à l'autre, une lame d'aiguillage mobile (50) étant prévue, avec laquelle les marchandises (11) peuvent être redirigées entre la première et la deuxième section de transport (20 ; 30), un premier palier pivotant (70) étant prévu, lequel peut être amené en prise avec la lame d'aiguillage (50) de telle sorte que la lame d'aiguillage (50) puisse tourner par rapport à un premier axe de rotation (71),
**caractérisé en ce que**
un deuxième palier pivotant (72) est prévu, lequel peut être amené en prise avec la lame d'aiguillage (50) de telle sorte que la lame d'aiguillage (50) puisse tourner par rapport à un deuxième axe de rotation (73) différent du premier (71), l'engagement entre le premier palier pivotant (70) et la lame d'aiguillage (50) pouvant être établi et rompu, l'engagement entre le deuxième palier pivotant (72) et la lame d'aiguillage (50) pouvant être établi et rompu.

2. Dispositif de transport selon la revendication 1, dans lequel les premiers et deuxièmes moyens de transport (22 ; 32) définissent un plan de transport commun (12) ou deux plans de transport espacés parallèlement, le premier et le deuxième axe de rotation (71 ; 73) étant disposés perpendiculairement au plan de transport (12) et à distance l'un de l'autre.

3. Dispositif de transport selon l'une quelconque des revendications précédentes, dans lequel la lame d'aiguillage (50) présente une première, une deuxième, et une troisième position d'extrémité (61 ; 62 ; 63), dans la première position d'extrémité (61), le premier et le deuxième palier pivotant (70 ; 72) pouvant être amenés en prise avec la lame d'aiguillage (50), dans la deuxième position d'extrémité (62), seulement le premier palier pivotant (70) pouvant être amené en prise avec la lame d'aiguillage (50), l'extrémité de la lame d'aiguillage (50) opposée au premier axe de rotation (71) s'appliquant contre un premier guide latéral (41) de la première section de transport (20), dans la troisième position d'extrémité (63), seulement le deuxième palier pivotant (72) pouvant être amené en prise avec la lame d'aiguillage (50), l'extrémité de la lame d'aiguillage (50) opposée au deuxième axe de rotation (73) s'appliquant contre le premier guide latéral (41).

4. Dispositif de transport selon l'une quelconque des revendications précédentes, dans lequel la première section de transport (20) présente un premier et un deuxième guide latéral (41 ; 42) qui sont disposés parallèlement à la première direction de transport (21) et à distance l'un de l'autre, la deuxième section de transport (30) présentant un troisième et un quatrième guide latéral (43 ; 44) qui sont disposés parallèlement à la deuxième direction de transport (31) et à distance l'un de l'autre, le deuxième guide latéral (42) présentant, au moins dans la région entre le troisième et le quatrième guide latéral (43 ; 44) une interruption (47) qui peut être surmontée au moins en partie avec un cinquième guide latéral (45) sur la lame d'aiguillage (50).

5. Dispositif de transport selon la revendication 4, dans lequel le premier palier pivotant (70) est disposé dans la région d'intersection entre le deuxième et le troisième guide latéral (42 ; 43), le deuxième palier pivotant (72) étant disposé dans la région d'intersection entre le deuxième et le quatrième guide latéral (42 ; 44).

6. Dispositif de transport selon l'une quelconque des revendications précédentes, dans lequel le premier et/ou le deuxième palier pivotant (70 ; 72) présentent à chaque fois un tourillon de palier (74) qui s'étend dans la direction du premier, respectivement du deuxième, axe de rotation concerné (71 ; 73) et qui peut être amené en prise avec un premier, respectivement un deuxième, alésage de palier respectivement associé (51 ; 52) sur la lame d'aiguillage (50), ledit engagement pouvant être établi et rompu par un mouvement linéaire du tourillon de palier concerné (74) dans la direction du premier, respectivement du deuxième, axe de rotation (71 ; 73).

7. Dispositif de transport selon la revendication 6, dans lequel au moins un tourillon de palier (74) est accouplé de manière mobile à un entraînement linéaire associé (75).

8. Dispositif de transport selon la revendication 6 ou 7, dans lequel au moins un tourillon de palier (74) traverse une pièce de déviation associée (14) qui peut être amenée en prise de guidage latéral avec les marchandises (11) au niveau du côté intérieur respectif de la courbe.

9. Dispositif de transport selon l'une quelconque des revendications précédentes, dans lequel un entraînement de lame unique (90) est prévu, lequel est en liaison d'entraînement en rotation avec la lame d'aiguillage (50) de telle sorte que celle-ci puisse tourner par le biais de l'entraînement de lame (90) de manière sélective autour du premier ou du deuxième axe de rotation (71 ; 73).

10. Dispositif de transport selon la revendication 9, dans lequel l'entraînement de lame (90) présente un chariot déplaçable linéairement (91) qui est disposé entre le premier et le deuxième guide latéral (40 ; 41).

11. Dispositif de transport selon la revendication 10, dans lequel les premiers moyens de transport (22) sont formés par plusieurs premiers rouleaux de guidage rotatifs (23), l'axe de rotation concerné (24) s'étendant perpendiculairement à la première direction de transport (21), le chariot (91) étant déplaçable linéairement perpendiculairement à la première direction de transport (21) et étant disposé entre deux premiers rouleaux de transport adjacents (23).

12. Dispositif de transport selon la revendication 10 ou 11, dans lequel le chariot (91) présente un dispositif d'entraînement (92) qui vient en prise dans une rainure d'entraînement (53) au niveau du côté inférieur de la lame d'aiguillage (50), le dispositif d'entraînement (92) pouvant être déplacé le long de la rainure d'entraînement (53).

13. Dispositif de transport selon la revendication 12, dans lequel la rainure d'entraînement (53) s'étend sur la lame d'aiguillage (50) le long d'une trajectoire courbe qui est réalisée de préférence sous forme circulaire.

14. Dispositif de transport selon l'une quelconque des revendications précédentes, dans lequel la lame d'aiguillage (50) est réalisée avec une symétrie spéculaire.

15. Dispositif de transport selon l'une quelconque des revendications précédentes, dans lequel la lame d'aiguillage (50) présente un sixième guide latéral (46) pour les marchandises (11), lequel est réalisé avec une forme de courbure concave.

16. Dispositif de collecte constitué d'un premier et d'un deuxième dispositif de transport, le premier dispositif de transport étant réalisé selon l'une quelconque des revendications précédentes, le deuxième dispositif de transport, à l'exception du premier et du deuxième palier pivotant, étant réalisé de manière identique au premier dispositif de transport, le deuxième dispositif de transport ne présentant pas de deuxième palier pivotant, le premier palier pivotant du deuxième dispositif de transport étant de préférence en prise permanente avec la lame d'aiguillage.
